# EUROPEAN PATENT SPECIFICATION

(11) **EP 4 259 908 B1**
(45) Date of publication and mention of the grant of the patent: **16.09.2026**
(21) Application number: 21904320.5
(22) Date of filing: 08.12.2021
(51) Int. Cl.: F02D 41/02, F01N 9/00, F02D 41/14, F01N 11/00, F01N 3/10, F02D 41/00, F02D 41/40

(54) **ADJUSTING THERMAL MANAGEMENT MODE ENTRY AND EXIT TEMPERATURE THRESHOLDS BASED ON AFTERTREATMENT SYSTEM AGING**
EINSTELLUNG VON EINGANGS- UND AUSGANGSTEMPERATURSCHWELLEN EINES WÄRMEVERWALTUNGSMODUS AUF BASIS DER ALTERUNG EINES NACHBEHANDLUNGSSYSTEMS
AJUSTEMENT DES SEUILS DE TEMPÉRATURE D'ENTRÉE ET DE SORTIE DE MODE DE GESTION THERMIQUE SUR LA BASE DU VIEILLISSEMENT DU SYSTÈME DE POST-TRAITEMENT

(30) Priority: 09.12.2020 US 202063123151 P
(43) Date of publication of application: 18.10.2023
(73) Proprietor: Cummins Inc., Columbus, IN 47201 (US)
(72) Inventor: BARE, Kristopher R., Columbus, Indiana 47203 (US); CUNNINGHAM, Michael J., Columbus, Indiana 46143 (US); LIGHT-HOLETS, Jennifer Kay, Greenwood, Indiana 46143 (US); SONG, Xiaobo, Columbus, Indiana 47201 (US); TURLAPATI, Agneya, Indianapolis, Indiana 46202 (US)
(74) Representative: Cleveland Scott York
(86) International application number: PCT/US2021/062384
(87) International publication number: WO 2022/125648

(56) References cited:
- EP-B1- 1 953 356
- US-A1- 2007 062 179
- US-A1- 2010 024 393
- US-A1- 2011 030 348
- US-A1- 2012 067 114
- US-A1- 2013 060 454
- US-A1- 2015 292 383
- US-A1- 2017 167 342
- US-A1- 2017 167 342
- US-A1- 2018 230 885

## Description

### CROSS-REFERENCE TO RELATED APPLICATION

This application claims the benefit of and priority to U.S. Provisional Patent Application No. 63/123151, filed December 9, 2020.

### TECHNICAL FIELD

The present disclosure relates to controlling a thermal management mode for an engine-exhaust aftertreatment system by actively adjusting the thermal management mode entry and exit temperature thresholds based on aftertreatment system aging.

### BACKGROUND

Many engines are coupled to exhaust aftertreatment systems that reduce harmful exhaust gas emissions (e.g., nitrous oxides (NOx), sulfur oxides, particulate matter, etc.). For example, a reductant may be injected into the exhaust stream to chemically bind to particles in the exhaust gas. This mixture interacts with a Selective Catalytic Reduction (SCR) catalyst that, at a certain temperature, causes a reaction in the mixture that converts the harmful NOx particles into pure nitrogen and water. Over time, the aftertreatment system ages which may result in the system losing its efficacy (e.g., a reduction in an ability to convert NOx to less harmful elements). US 2017/167342 A1 relates to a method for adjusting the temperature of an exhaust gas aftertreatment device is disclosed. A first characteristic temperature value for an oxidative carbon monoxide conversion and a second characteristic temperature value for an oxidative hydrocarbon conversion are assigned to an oxidation catalytic converter, and a third characteristic temperature value for a reductive NOx conversion is assigned to an SCR catalytic converter. US 2011/030348 A1 relates to an engine system includes an aging factor generation module, a temperature comparison module, and a mode control module. The aging factor generation module generates an aging factor that indicates deterioration of a catalyst in a selective catalytic reduction (SCR) system. The temperature comparison module compares inlet and outlet temperatures of the SCR system to predetermined effective inlet and outlet temperatures of the SCR system, respectively, wherein the predetermined effective inlet and outlet temperatures are based on the aging factor.

### SUMMARY

One embodiment relates to a system. The system includes a controller including at least one processor and at least one memory device coupled to the at least one processor, the at least one memory device storing instructions therein that, when executed by the at least one processor, cause the controller to perform operations. The operations include: estimate an aging of an exhaust aftertreatment system coupled to an engine; receive a space velocity through the exhaust aftertreatment system; and adjust at least one of an entry temperature threshold or an exit temperature threshold for a thermal management mode for the exhaust aftertreatment system based on the space velocity and the estimated age of the exhaust aftertreatment system.

Another embodiment relates to a system. The system includes an exhaust aftertreatment system coupled to an engine; and the controller as described above.

Still another embodiment relates to a method. The method includes: estimating an aging of an exhaust aftertreatment system coupled to an engine; receiving a space velocity through the exhaust aftertreatment system; and adjusting at least one of an entry temperature threshold or an exit temperature threshold for a thermal management mode for the exhaust aftertreatment system based on the space velocity and the aging of the exhaust aftertreatment system.

This summary is illustrative only and is not intended to be in any way limiting. Other aspects, features, and advantages of the devices or processes described herein will become apparent in the detailed description set forth herein, taken in conjunction with the accompanying figures, wherein like reference numerals refer to like elements.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE FIGURES

FIG. 1 is a schematic view of a block diagram of a vehicle system, according to an example embodiment.
FIG. 2 is a block diagram of the controller of FIG. 1, according to an example embodiment.
FIG. 3 is a flow diagram of logic for the controller of FIGS. 1-2, according to an example embodiment.
FIG. 4 is a flow diagram of logic for the controller of FIGS. 1-2, according to an example embodiment.
FIG. 5 is a flow diagram of logic for the controller of FIGS. 1-2, according to an example embodiment.

### DETAILED DESCRIPTION

Following below are more detailed descriptions of various concepts related to, and implementations of, methods, apparatuses, and systems to actively adjust thermal management entry and exit thresholds based on aftertreatment system aging. Before turning to the Figures, which illustrate certain exemplary embodiments in detail, it should be understood that the present disclosure is not limited to the details or methodology set forth in the description or illustrated in the Figures. It should also be understood that the terminology used herein is for the purpose of description only and should not be regarded as limiting.

Exhaust gas aftertreatment systems may utilize thermal management operating modes. A "thermal management mode" refers to operating the system, such as the engine, the exhaust gas aftertreatment system, or components thereof, to actively increase a temperature of the exhaust aftertreatment system. During the thermal management mode, a controller may change from a set of operating maps (e.g., parameters that control operation of the engine that may include, for example, fueling maps) which are mostly optimized for fuel economy to a set of maps that are mostly optimized for providing higher temperature for the aftertreatment. As an example and during the thermal management mode, the controller may provide commands to increase an exhaust gas temperature to increase the temperature of one or more components in the exhaust gas aftertreatment system (e.g., via higher engine power outputs, implementing a cylinder deactivation mode, etc.). A cylinder deactivation (CDA) mode is a broad term that encompasses various related but distinct cylinder deactivation operating modes. A first type of CDA operating mode is known as "fixed cylinder CDA." In fixed cylinder CDA operating mode, the same cylinder(s) are active/inactive each engine cycle during the fixed cylinder CDA operating mode. A second type of CDA operating mode is known as a "skip-fire" or a "dynamic skip-fire" operating mode. In skip-fire CDA mode, one or more cylinders are deactivated/inactive (e.g., combustion does not occur) on a cycle-by-cycle basis. Accordingly, a cylinder may be inactive for a first engine cycle and active for a second engine cycle. An "active" cylinder means that combustion is allowed to occur in that cylinder. An "inactive" or "deactivated" cylinder means that combustion is not allowed to occur in that cylinder. The present disclosure is applicable with each type of CDA operating mode, and the term CDA mode is meant to encompass all such operating modes unless indicated otherwise. Additionally, as another example, the thermal management mode may include commanding designated features via the controller to increase the temperature (e.g., an electric heater that is activated to heat the exhaust gas or a component of the aftertreatment system).

As described herein, systems, methods, apparatuses for actively adjusting and applying thermal management mode entry and exit temperature thresholds to an engine aftertreatment system based on exhaust aftertreatment system aging are disclosed according to various embodiments. Entry and exit thresholds determine when the system goes into and exits a thermal management mode, respectively. The entry and exit thresholds refer to entry and exit temperatures. In this regard, the thermal management mode may be implemented/activated to raise the aftertreatment system temperature when the temperature is below a predefined threshold (entry threshold), and then once the temperature exceeds a predefined threshold (exit threshold), the thermal management mode is deactivated in favor of normal operation. These thresholds are typically static and not adjusted. In this regard, these temperature thresholds are typically set at the manufacturing date or at the beginning of a product launch, and remain the same for the life of the product. However, if the thresholds are not adjusted, over time an SCR ages and a conversion efficiency of nitrous oxide (NOx) will decrease. Thus, a system out NOx may start to increase over time (e.g., as a vehicle puts more and more miles on). An end of life performance will likely coincide with a much higher system out NOx than at the beginning of life. This performance degradation may further result in a lack of compliance with various regulations (e.g., CARB, EPA, or other environmental regulations). According to the present disclosure, a controller estimates an age of the aftertreatment system or component thereof based on one or more parameters and adjusts the thermal management mode temperature exit and entry thresholds based on the determined age. The age determination or estimation (also referred to as an age or aging condition) may be based on several factors, such as system on-time, miles travelled, number of duty cycles, amount of time spent over temperature threshold, and number of active regeneration events among others. After determining the aftertreatment aging condition, the entry and exit thresholds of the aftertreatment thermal management modes are adjusted to manage system out emissions (e.g., NOx emissions such as a system out NOx conversion value) and to aid the efficacy of the aftertreatment system as well as preserve the life of the aftertreatment system.

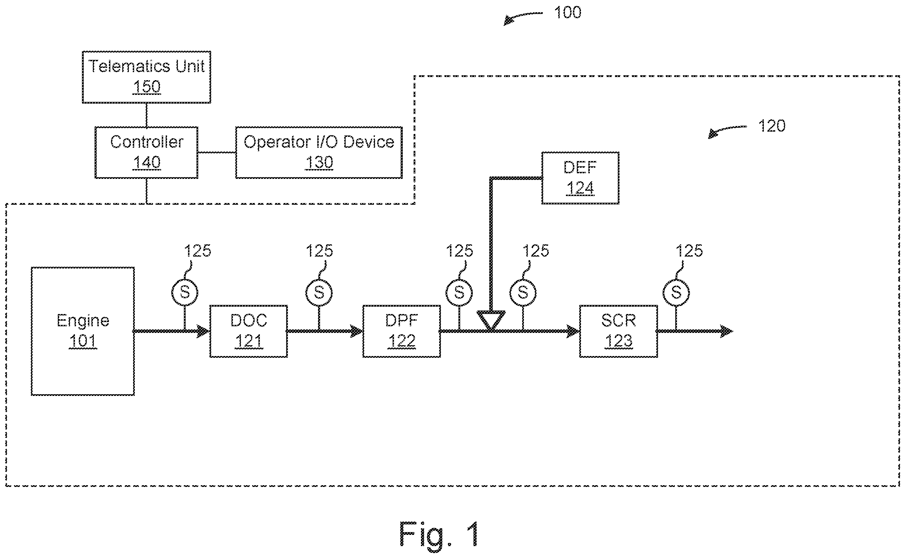

Referring now to FIG. 1, a system 100 is illustrated according to an exemplary embodiment. The system 100 includes an engine 101, an aftertreatment system 120 coupled to the engine 101, an operator I/O device 130, a controller 140, and a telematics unit 150, where the controller 140 is communicably coupled to each of the aforementioned components. The telematics unit 150 facilitates the acquisition and transmission of data acquired regarding the operation of the system 100. According to one embodiment, the system 100 is embodied in a vehicle. In various alternate embodiments, the system 100 may be implemented in a non-vehicular application (e.g., a power generator or gen-set). In the example shown, the system 100 is embodied in a vehicle. The vehicle may be an on-road or an off-road vehicle including, but not limited to, line-haul trucks, mid-range trucks (e.g., pick-up trucks), sedans, coupes, tanks, airplanes, boats, and any other type of vehicle that utilizes an exhaust aftertreatment system.

In the example shown, the engine 101 is structured as a compression-ignition internal combustion engine that utilizes diesel fuel. However, in various alternate embodiments, the engine 101 may be structured as another type of engine (e.g., spark-ignition) that utilizes another type of fuel (e.g., gasoline, natural gas, biodiesel). In still other example embodiments, the engine 101 may be or include an electric motor (e.g., a hybrid drivetrain). The engine 101 includes one or more cylinders and associated pistons. Air from the atmosphere is combined with fuel, and combusted, to power the engine 101. Combustion of the fuel and air in the compression chambers of the engine 101 produces exhaust gas that is operatively vented to an exhaust pipe and to the aftertreatment system 120. The engine 101 may be coupled to a turbocharger (not shown). The turbocharger (e.g., variable geometry turbocharger) includes a compressor coupled to an exhaust gas turbine via a connector shaft. Generally, hot exhaust gasses spin the turbine which rotates the shaft and in turn, the compressor, which draws air in. By compressing the air, more air can enter the cylinders, or combustion chamber, thus burning more fuel and increasing power and efficiency. A heat exchanger, such as a charge air cooler, may be used to cool the compressed air before the air enters the cylinders. In some embodiments, the turbocharger is omitted.

The aftertreatment system 120 is shown, according to an example embodiment. It should be understood that the schematic depicted in FIG. 1 is but one implementation of an exhaust gas aftertreatment system. Many different configurations may be implemented that utilize the systems and methods described herein.

The aftertreatment system 120 is structured to treat exhaust gases from the engine 101, which enter the aftertreatment system 120 via an exhaust pipe, in order to reduce the emissions of harmful or potentially harmful elements (e.g., NOx emissions, particulate matter, SOx, greenhouse gases, CO, etc.). The aftertreatment system 120 may include various components and systems, such as a diesel oxidation catalyst (DOC) 121, a diesel particulate filter (DPF) 122, and a selective catalytic reduction (SCR) system 123. The SCR system 123 converts nitrogen oxides present in the exhaust gases produced by the engine 101 into diatomic nitrogen and water through oxidation within a catalyst. The DPF 122 is configured to remove particulate matter, such as soot, from exhaust gas flowing in the exhaust gas conduit system. In some implementations, the DPF 122 may be omitted. Also, the spatial order of the catalyst elements may be different.

The SCR catalyst operation can be affected by several factors. For example, the effectiveness of the SCR catalyst to reduce the NOx in the exhaust gas can be affected by the operating temperature. If the temperature of the SCR catalyst is below a threshold value or range, the effectiveness of the SCR catalyst in reducing NOx may be reduced below a desired threshold level, thereby increasing the risk of high NOx emissions into the environment. The SCR catalyst temperature can be below the threshold temperature under several conditions, such as, for example, during and immediately after engine startup, during cold environmental conditions, etc. In operation, typically, higher combustion temperatures promote engine out NOx (EONOx) production. This is due to the rapid fire expansion from within the cylinder, which leads to the release of NOx. Increasing exhaust gas recirculation (EGR) leads to reduction in combustion temperatures, which reduces EONOx. However, EGR can promote particulate matter emissions due to incomplete combustion of particles. Additionally, higher loads and power demands also tend to increase combustion temperatures and, in turn, EONOx. Higher power output coincides with higher fueling pressures and quantity (increases in fuel rail pressure). In turn, increasing fueling pressures, quantity, etc. also tends to promote EONOx production. The effectiveness of the SCR catalyst can also be affected by faults in the SCR system that indicate, for example, a lack of reductant, a build-up on the SCR catalyst, a sustained conversion efficiency below a predefined value (e.g., a NOx conversion efficiency), etc.

The aftertreatment system 120 may further include a reductant delivery system which may include a decomposition chamber (e.g., decomposition reactor, reactor pipe, decomposition tube, reactor tube, etc.) to convert the reductant (e.g., urea, diesel exhaust fluid (DEF), Adblue^{®}, a urea water solution (UWS), an aqueous urea solution, etc.) into ammonia. A diesel exhaust fluid (DEF) 124 is added to the exhaust gas stream to aid in the catalytic reduction. The reductant may be injected by an injector upstream of the SCR catalyst member such that the SCR catalyst member receives a mixture of the reductant and exhaust gas. The reductant droplets undergo the processes of evaporation, thermolysis, and hydrolysis to form non-NOₓ emissions (e.g., gaseous ammonia, etc.) within the decomposition chamber, the SCR catalyst member, and/or the exhaust gas conduit system, which leaves the aftertreatment system 120. The aftertreatment system 120 may further include an oxidation catalyst (e.g., the DOC 121) fluidly coupled to the exhaust gas conduit system to oxidize hydrocarbons and carbon monoxide in the exhaust gas. In order to properly assist in this reduction, the DOC 121 may be required to be at a certain operating temperature. In some embodiments, this certain operating temperature is between 200 degrees C and 500 degrees C. In other embodiments, the certain operating temperature is the temperature at which the conversion efficiency of the DOC 121 exceeds a predefined threshold (e.g., the conversion of NOx to less harmful compounds, which is known as the NOx conversion efficiency).

As shown, a plurality of sensors 125 are included in the aftertreatment system 120. The number, placement, and type of sensors included in the aftertreatment system 120 is shown for example purposes only. In other configurations, the number, placement, and type of sensors may differ. The sensors 125 may be NOx sensors, temperature sensors, particulate matter (PM) sensors, flow rate sensors, other emissions constituents sensors, pressure sensors, some combination thereof, and so on. The NOx sensors are structured to acquire data indicative of a NOx amount at each location that the NOx sensor is located (e.g., a concentration amount, such as parts per million). The temperature sensors are structured to acquire data indicative of a temperature at their locations. The PM sensors are structured to monitor particulate matter flowing through the aftertreatment system 120.

The sensors 125 may be located after the engine 101 and before the aftertreatment system 120, after the aftertreatment system 120, and in between the aftertreatment system components as shown (e.g., coupled to the DPF and/or DOC, coupled to the SCR, etc.). It should be understood that the location of the sensors may vary. In one embodiment, there may be sensors 125 located both before and after the aftertreatment system 120. In one embodiment, at least one of the sensors is structured as exhaust gas constituent sensors (e.g., CO, NOx, PM, SOx, etc. sensors). In another embodiment, at least one of the sensors 125 is structured as non-exhaust gas constituent sensors that are used to estimate exhaust gas emissions (e.g., temperature, flow rate, etc.). Additional sensors may be also included with the system 100. The sensors may include engine-related sensors (e.g., torque sensors, speed sensors, pressure sensors, flow rate sensors, temperature sensors, etc.). The sensors may further sensors associated with other components of the vehicle (e.g., speed sensor of a turbo charger, fuel quantity and injection rate sensor, fuel rail pressure sensor, etc.).

The sensors may be real or virtual (i.e., a non-physical sensor that is structured as program logic in the controller that makes various estimations or determinations). For example, an engine speed sensor may be a real or virtual sensor arranged to measure or otherwise acquire data, values, or information indicative of a speed of the engine 101 (typically expressed in revolutions-per-minute). The sensor is coupled to the engine (when structured as a real sensor), and is structured to send a signal to the controller 140 indicative of the speed of the engine 101. When structured as a virtual sensor, at least one input may be used by the controller 140 in an algorithm, model, lookup table, etc. to determine or estimate a parameter of the engine (e.g., power output, etc.). The other sensors may be real or virtual as well.

The controller 140 is communicably coupled to the sensors 125. Accordingly, the controller 140 is structured to receive data from one more of the sensors 125. The received data may be used by the controller 140 to control one more components in the system 100 and/or for monitoring and diagnostic purposes.

Referring still to FIG. 1, an operator input/output (I/O) device 130 is also shown. The operator I/O device 130 may be communicably coupled to the controller 140, such that information may be exchanged between the controller 140 and the I/O device 130, wherein the information may relate to one or more components of FIG. 1 or determinations (described below) of the controller 140. The operator I/O device 130 enables an operator of the system 100 to communicate with the controller 140 and one or more components of the system 100 of FIG. 1. For example, the operator input/output device 130 may include, but is not limited to, an interactive display, a touchscreen device, one or more buttons and switches, voice command receivers, etc. In various alternate embodiments, the controller 140 and components described herein may be implemented with non-vehicular applications (e.g., a power generator). Accordingly, the I/O device may be specific to those applications. For example, in those instances, the I/O device may include a laptop computer, a tablet computer, a desktop computer, a phone, a watch, a personal digital assistant, etc. Via the operator I/O device, the controller 140 may provide diagnostic information, a fault or service notification based on one or more determinations. For example, in some embodiments, the controller 140 may display, via the operator I/O device, a temperature of the DOC 121, a temperature of the engine 101 and the exhaust gas, and various other information.

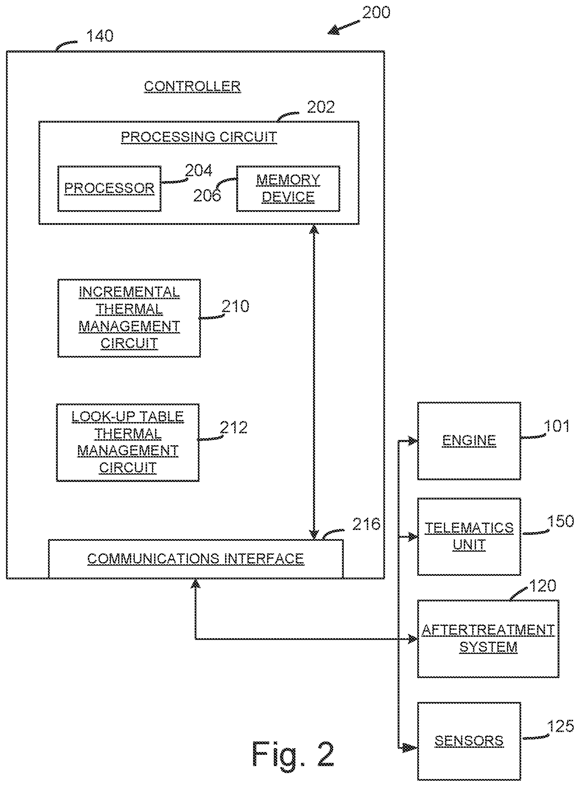

The controller 140 is structured to control, at least partly, the operation of the system 100 and associated sub-systems, such as the aftertreatment system 120 (and various components of each system), and the operator input/output (I/O) device 130. Communication between and among the components may be via any number of wired or wireless connections. For example, a wired connection may include a serial cable, a fiber optic cable, a CAT5 cable, or any other form of wired connection. In comparison, a wireless connection may include the Internet, Wi-Fi, cellular, radio, etc. In one embodiment, a controller area network (CAN) bus provides the exchange of signals, information, and/or data. The CAN bus includes any number of wired and wireless connections. Because the controller 140 is communicably coupled to the systems and components of FIG. 1, the controller 140 is structured to receive data from one or more of the components shown in FIG. 1. The structure and function of the controller 140 is further described in regard to FIG. 2.

The telematics unit 150 may include, but is not limited to, one or more memory devices for storing tracked data, one or more electronic processing units for processing the tracked data, and a communications interface for facilitating the exchange of data between the telematics unit 150 and one or more remote devices (e.g., a provider/manufacturer of the telematics device, etc.). In this regard, the communications interface may be configured as any type of mobile communications interface or protocol including, but not limited to, Wi-Fi, WiMax, Internet, Radio, Bluetooth, Zigbee, satellite, radio, Cellular, GSM, GPRS, LTE, and the like. The telematics unit 150 may also include a communications interface for communicating with the controller 140 of the system 100. The communication interface for communicating with the controller 140 may include any type and number of wired and wireless protocols (e.g., any standard under IEEE 802, etc.). For example, a wired connection may include a serial cable, a fiber optic cable, an SAE J1939 bus, a CAT5 cable, or any other form of wired connection. In comparison, a wireless connection may include the Internet, Wi-Fi, Bluetooth, Zigbee, cellular, radio, etc. In one embodiment, a controller area network (CAN) bus including any number of wired and wireless connections provides the exchange of signals, information, and/or data between the controller 140 and the telematics unit 150. In other embodiments, a local area network (LAN), a wide area network (WAN), or an external computer (for example, through the Internet using an Internet Service Provider) may provide, facilitate, and support communication between the telematics unit 150 and the controller 140. In still another embodiment, the communication between the telematics unit 150 and the controller 140 is via the unified diagnostic services (UDS) protocol. All such variations are intended to fall within the spirit and scope of the present disclosure.

Referring now to FIG. 2, a schematic diagram 200 of the controller 140 of FIG. 1 is shown according to an example embodiment. The controller 140 may be structured as one or more electronic control units (ECU). The controller 140 may be separate from or included with at least one of a transmission control unit, an exhaust aftertreatment control unit, a powertrain control module, an engine control module, etc. In one embodiment, the components of the controller 140 are combined into a single unit. In another embodiment, one or more of the components may be geographically dispersed throughout the system. All such variations are intended to fall within the scope of the disclosure. The controller 140 is shown to include a processing circuit 202 having a processor 204 and a memory device 206, a thermal management circuit 210, an aging circuit 212, and a communications interface 216.

In one configuration, the thermal management circuit 210 and the aging circuit 212 are embodied as machine or computer-readable media storing instructions that are executable by a processor, such as processor 204. As described herein and amongst other uses, the machine-readable media facilitates performance of certain operations to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data) among other functionalities. The computer readable media may include code, which may be written in any programming language including, but not limited to, Java or the like and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the thermal management circuit 210 and the aging circuit 212 are embodied as hardware units. As such, the thermal management circuit 210 and the aging circuit 212 may include one or more circuitry components including, but not limited to, processing circuitry, network interfaces, peripheral devices, input devices, output devices, sensors, etc. In some embodiments, the thermal management circuit 210 and the aging circuit 212 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the thermal management circuit 210 and the aging circuit 212 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on). The thermal management circuit 210 and the aging circuit 212 may also include programmable hardware devices such as field programmable gate arrays, programmable array logic, programmable logic devices or the like. The thermal management circuit 210 and the aging circuit 212 may include one or more memory devices for storing instructions that are executable by the processor(s) of the thermal management circuit 210 and the aging circuit 212. The one or more memory devices and processor(s) may have the same definition as provided below with respect to the memory device 206 and processor 204. In some hardware unit configurations and as described above, the thermal management circuit 210 and the aging circuit 212 may be geographically dispersed throughout separate locations in the system. Alternatively and as shown, the thermal management circuit 210 and the aging circuit 212 may be embodied in or within a single unit/housing, which is shown as the controller 140.

In the example shown, the controller 140 includes the processing circuit 202 having the processor 204 and the memory device 206. The processing circuit 202 may be structured or configured to execute or implement the instructions, commands, and/or control processes described herein with respect to the thermal management circuit 210 and the aging circuit 212. The depicted configuration represents the thermal management circuit 210 and the aging circuit 212 as machine or computer-readable media. However, as mentioned above, this illustration is not meant to be limiting as the present disclosure contemplates other embodiments where the thermal management circuit 210 and the aging circuit 212, or at least one circuit of the circuits the thermal management circuit 210 and the aging circuit 212, is configured as a hardware unit. All such combinations and variations are intended to fall within the scope of the present disclosure.

The processor 204 may be implemented as one or more processors, an application specific integrated circuit (ASIC), one or more field programmable gate arrays (FPGAs), a digital signal processor (DSP), a group of processing components, or other suitable electronic processing components. In some embodiments, the one or more processors may be shared by multiple circuits (e.g., the thermal management circuit 210 and the aging circuit 212 may comprise or otherwise share the same processor which, in some example embodiments, may execute instructions stored, or otherwise accessed, via different areas of memory). Alternatively or additionally, the one or more processors may be structured to perform or otherwise execute certain operations independent of one or more co-processors. In other example embodiments, two or more processors may be coupled via a bus to enable independent, parallel, pipelined, or multi-threaded instruction execution. All such variations are intended to fall within the scope of the present disclosure.

The memory device 206 (e.g., memory, memory unit, storage device) may include one or more devices or components (e.g., RAM, ROM, Flash memory, hard disk storage) for storing data and/or computer code for completing or facilitating the various processes, layers and modules described in the present disclosure. The memory device 206 may be communicably connected to the processor 204 to provide computer code or instructions to the processor 204 for executing at least some of the processes described herein. Moreover, the memory device 206 may be or include tangible, non-transient volatile memory or non-volatile memory. Accordingly, the memory device 206 may include database components, object code components, script components, or any other type of information structure for supporting the various activities and information structures described herein.

The communications interface 216 may include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and, in some embodiments, out-of-vehicle communications (e.g., with a remote server such as via the telematics unit). For example and regarding out-of-vehicle/system communications, the communications interface 216 may include an Ethernet card and port for sending and receiving data via an Ethernet-based communications network and/or a Wi-Fi transceiver for communicating via a wireless communications network. The communications interface 216 may be structured to communicate via local area networks or wide area networks (e.g., the Internet) and may use a variety of communications protocols (e.g., IP, LON, Bluetooth, ZigBee, radio, cellular, near field communication).

The communications interface 216 may facilitate communication between and among the controller 140 and one or more components of the system 100 (e.g., the engine 101, the aftertreatment system 120, the sensors 125 etc.). Communication between and among the controller 140 and the components of the system 100 may be via any number of wired or wireless connections (e.g., any standard under IEEE). For example, a wired connection may include a serial cable, a fiber optic cable, a CAT5 cable, or any other form of wired connection. In one embodiment, a controller area network (CAN) bus provides the exchange of signals, information, and/or data. The CAN bus can include any number of wired and wireless connections that provide the exchange of signals, information, and/or data. The CAN bus may include a local area network (LAN), or a wide area network (WAN), or the connection may be made to an external computer (for example, through the Internet using an Internet Service Provider).

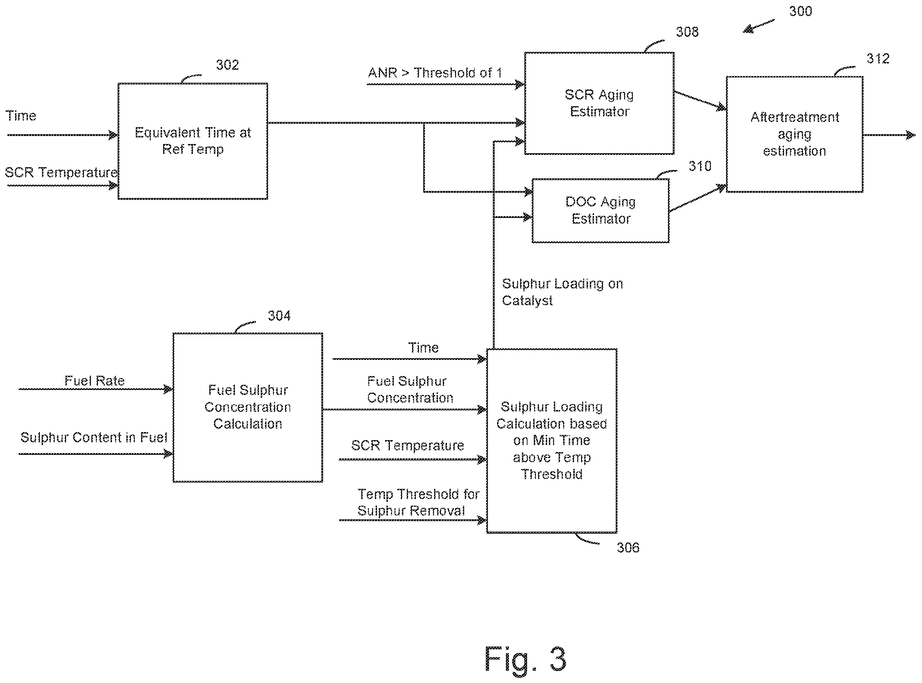

The thermal management circuit 210 is structured to control activation and deactivation of a thermal management mode with the system 100. In particular, the thermal management circuit 210 controls activation and deactivation of the thermal management mode based on dynamically controlling and adjusting thermal management mode entry and exit temperature thresholds. The thermal management circuit 210 adjusts the aftertreatment system entry and exit temperature thresholds based on a space velocity and an aging of the aftertreatment system or a component thereof. The thermal management circuit 210 may activate the thermal management mode to increase an aftertreatment temperature to, for example, reduce NOx emissions (e.g., by decreasing the thermal management mode entry temperature threshold to cause more frequent implementations of the thermal management mode). As described above, there is an entry and an exit temperature threshold for the thermal management mode. When a temperature is at or below the entry temperature threshold, the thermal management circuit 210 activates the thermal management mode. When the temperature meets or exceeds the exit temperature threshold, the thermal management mode is deactivated in favor of normal operation of the vehicle/system. As described herein, the entry and exit temperature thresholds are dynamically adjusted based on the age of the aftertreatment system. This determination may be made based on an age and a space velocity of the aftertreatment system, as explained herein with reference to FIGS. 3-5. This determination may also be based on a system out NOx amount or NOx conversion value in order to continuously reduce NOx output (e.g., by comparing the system out NOx amount to a desired level and adjusting the entry and exit temperature thresholds in response).

By adjusting the entry and exit thermal management mode temperature thresholds, the thermal management circuit 210 controls how frequent or infrequent the thermal management mode is triggered on/off. Beneficially, as the aftertreatment system ages or experiences fault conditions, lowering the entry temperature threshold causes thermal management modes to be triggered more frequently. As a result, even if the aftertreatment system is aged or experiencing a fault condition, the controller 140 is active in helping to promote catalytic activity via the thermal management mode to, in turn, reduce or mitigate emissions (e.g., NOx). Static thermal management mode entry and exit temperature thresholds may cause activating/deactivating thermal management modes in unnecessary situations. Further, with static thresholds, the thermal management mode(s) may be commanded unnecessarily, which may result in an increase in the wear and tear on the aftertreatment system. By dynamically adjusting the exit and entry thresholds, emissions are better controlled while causing thermal managements at better determined times. It should be understood that there may be multiple thermal management modes, with each corresponding with different actions (e.g., mode one includes post-injection while mode two include post-injection and activation of an electric heater). The present disclosure is applicable across the variety of different thermal management modes.

The "temperature" for the exit and entry temperature thresholds may be an exhaust gas temperature, a component temperature (e.g., the SCR temperature), and/or a combination thereof. In the example shown, the temperature refers to a determined or estimated SCR temperature (generally, an aftertreatment system temperature). The temperature may be determined based on data from one or more of the sensors 125 described above (or directly determined by the one or more sensors). The aftertreatment temperature may be determined at various locations (e.g., a system out temperature such as downstream of the aftertreatment system, between the engine and the aftertreatment system such as an engine out temperature, within the aftertreatment system, or some combination thereof). The aftertreatment temperatures may be based on temperature data acquired by the sensors 125 such that the aftertreatment temperature is determined at or near the location of the sensors (e.g., at various locations within the engine 101 and/or aftertreatment system 120). For example, a sensor 125 may be a DOC temperature sensor structured to determine or estimate the temperature in the aftertreatment system 120 at an entrance or exit of the DOC. A sensor 125 may be an SCR temperature sensor structured to determine or estimate the temperature in the aftertreatment system 120 at an entrance or exit of the SCR. The aftertreatment temperature may be determined based on temperature data from more than one sensor 125 positioned at various locations of the engine 101 and/or aftertreatment system 120 at various points in time of operation. For example, a system out temperature sensor may be positioned at or near an outlet point of an engine-exhaust aftertreatment system (e.g., in the tailpipe) to determine the exit temperature at a particular time. In another embodiment, the aftertreatment temperature may be determined at this position based on the average temperature over a predefined duration of time. Further, the controller 140 may determine how long the aftertreatment temperature has remained over the predefined threshold and whether that duration has exceeded a predefined threshold time period. As shown in FIG. 1, there may be two or more sensors positioned throughout the aftertreatment system 120 (proximate the SCR, DPF, DOC, etc.) that are used to determine the aftertreatment temperature. The thermal management circuit 210 may determine an aftertreatment temperature based on a determined average temperature over a predefined duration of time (e.g., average, median, etc.), a distance traveled of the vehicle (e.g., 100,000 miles), at a particular time of operation of the vehicle, or how long the aftertreatment temperature has remained over the predefined period of time.

The thermal management circuit 210 is structured to selectively activate and deactivate a thermal management mode for the system 100. In one embodiment, activation and deactivation is automatic based on the aftertreatment system temperature and, particularly, the SCR temperature. As part of the thermal management mode, the thermal management circuit 210 is structured to provide one or more commands to increase a temperature of the aftertreatment system to promote catalytic activity. The thermal management circuit 210 may utilize a command to increase an engine 101 power output (e.g., a torque and/or speed). The higher speed and torque promotes higher exhaust gas temperatures which may raise a SCR catalyst temperature. The thermal management circuit 210 may utilize additional thermal management mode commands, such as controlling (e.g., closing or otherwise actuating) an air-handling actuator such as a turbocharger position, an EGR position (e.g., the EGR valve), etc. The thermal management circuit 210 may also be coupled to fueling system to control, for example, a fuel rail pressure and other fueling commands for the engine (e.g., increasing and/or decreasing quantity and amount of fuel injected). Higher loads and power demands tend to increase combustion temperatures. Higher power output coincides with higher fueling pressures and quantity (increases in fuel rail pressure). In turn, increasing fueling pressures, quantity, etc. also tends to promote increased exhaust gas temperatures. Additional commands may include, but are not limited to, a post-injection command (injecting fuel after combustion that is used to cause higher exhaust gas temperatures), a cylinder deactivation mode command (e.g., turning some cylinders of the engine off such that the in-use cylinders work harder to maintain a desired power output that results in increased exhaust gas temperatures), activating an electric heater disposed in the aftertreatment system, changing an injection timing (e.g., retarding the injection), changing a position of an intake throttle (e.g., closing an intake throttle valve), controlling (e.g., closing or otherwise actuating) other air-handling actuator(s), such as an intake air bypass valve (e.g., selectively closing/opening/partially opening an air intake bypass valve to bypass an air intake), an exhaust bypass valve (e.g., selectively opening/closing/partially opening an exhaust bypass valve to bypass an exhaust conduit), an exhaust gas recirculation (EGR) valve (e.g., selectively opening/closing/partially opening an EGR valve to bypass providing EGR to the engine), and so on. The commands used may be based on a variety of factors, such as if the vehicle is stationary or moving, the determined NOx conversion efficiency, and so on. Accordingly, not all the commands may be used each time. The thermal management circuit 210 may selectively utilize one or more of the aforementioned commands (or others) in an activated thermal management mode.

The aging circuit 212 is structured to determine or estimate the aging of the aftertreatment system or a component thereof. As described herein, the age refers to the condition of the aftertreatment system or the component thereof based on the usage of the system 100. As the system ages, the efficacy of its operation may decrease due to, for example, build-up, reduced catalytic activity, and so on. The aging circuit 212 is configured to communicate with the thermal management circuit 210 so the thermal management circuit 210 may operate based on the determinations made by the aging circuit 212.

Referring now to FIG. 3, logic for the aging circuit 212 is shown according to an example embodiment. In particular, an example flow chart for determining the age of the system is depicted. The method 300 includes process 302 for determining an equivalent time at a reference temperature of the SCR. In this regard, at process 302, a time and SCR temperature are received by the aging circuit 212. The aging circuit 212 may utilize a model or lookup table to determine a time equivalent at a reference temperature. For example, temperatures at various times may be recorded over a time period. These data points may be grouped into equivalent times at various temperatures; in this way, temperature fluctuations do not cause large amounts of data points (e.g., 101 C at 5 minutes, 103 C at 15 minutes, 109 C at 35 minutes may be determined to be 110 C for 30 minutes via the aging circuit 212). Thus, various buckets may be determined and utilized by the aging circuit 212.

At process 304, a fuel rate and a Sulphur content are used to determine a fuel Sulphur concentration by the aging circuit 212. In this regard, the aging circuit 212 may use a formula, such as the following: (fuel rate) x (Sulphur content). This formula estimates a fuel Sulphur concentration amount. At process 306, the aging circuit 212 determines an amount of Sulphur loading in the aftertreatment system (particularly, the SCR) based on the determined fuel Sulphur concentration amount, the SCR temperature, a temperature threshold for Sulphur removal, and a time calculation. Deterioration due to Sulphur is largely reversible in that aftertreatment system regeneration events can be used to reverse the deterioration due to Sulphur. As the SCR gets exposed to Sulphur, which typically comes from the fuel, it starts deactivating some of the active sites on the SCR catalyst. Sulphur reduces the overall SCR conversion efficiencies. The temperature threshold for Sulphur removal may indicate an aftertreatment system temperature that, when exceeded or met, causes the Sulphur regeneration event to occur. The time above this temperature threshold is used to determine the Sulphur loading; particularly, this value is tracked after a minimum amount of time is reached. Increased time with the determined fuel Sulphur concentration above the Sulphur removal temperature may function to add wear on the aftertreatment system (e.g., SCR catalyst).

At process 308, the age of the SCR is estimated or determined by the aging circuit 212. The time equivalent at a reference temperature (process 302), Sulphur loading determination (process 306), and ammonia-to-NOx ratio (ANR) are used as inputs to estimate the SCR age. In the example shown, the SCR age is estimated when the ANR is above 1, which indicates a relatively high ammonia amount. These inputs may be fed into a table, such as a lookup table, where the aging circuit 212 then determines the age or condition of the SCR (e.g., healthy, deteriorated, operational but serving may be needed, etc.).

At process 310, the age of the DOC is estimated by the aging circuit 212. The aging circuit 212 utilizes the time equivalent at a reference temperature (process 302) and Sulphur loading on catalyst determination (process 306) as inputs. Similar to process 308, the aging circuit 212 may utilize a table, such as a lookup table, to determine the age or condition of the DOC (e.g., healthy, deteriorated, operational but serving may be needed, etc.).

At process 312, the aging circuit 212 determines or estimates the aftertreatment system age based on the estimated SCR and DOC age (processes 308 and 310). In other embodiments, the determined SCR age or DOC may be used individually to represent the age of the aftertreatment system. In this regard and as shown, the top half of FIG. 3 is an estimation of aging based on temperature because high temperature has an effect on SCR aging and DOC aging. The bottom half is the effect of Sulphur on aging the SCR and DOC. Both halves are calculated and combined together to determine what the aging estimation is for the aftertreatment system 120. Higher temperatures may promote conversion efficiency but will also increase aging. Similarly, the higher the Sulphur integral over time, the more adverse effect that will have on aging. Beneficially, the method 300 accounts for these factors in determining the age.

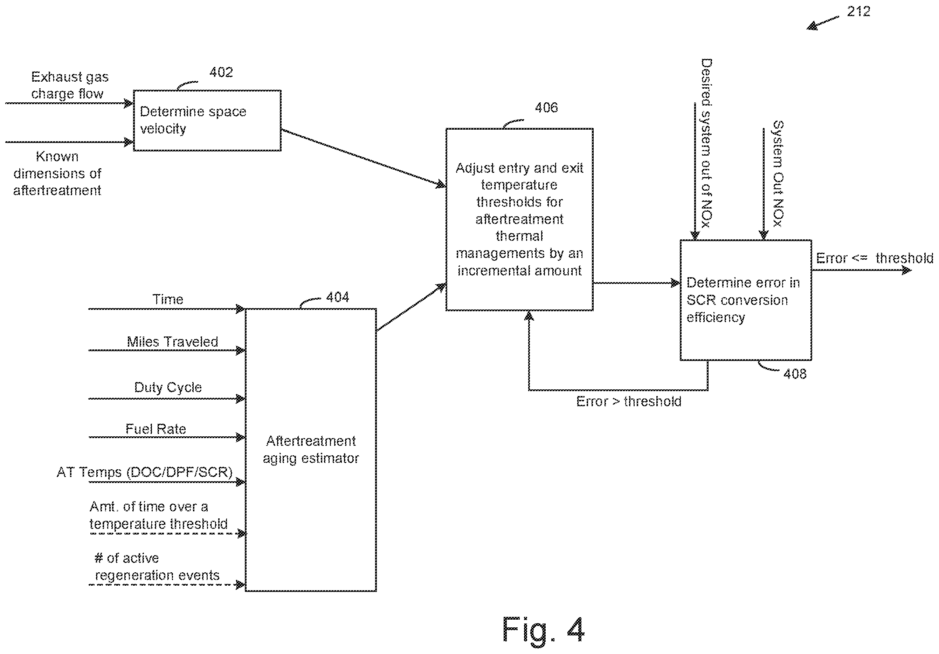

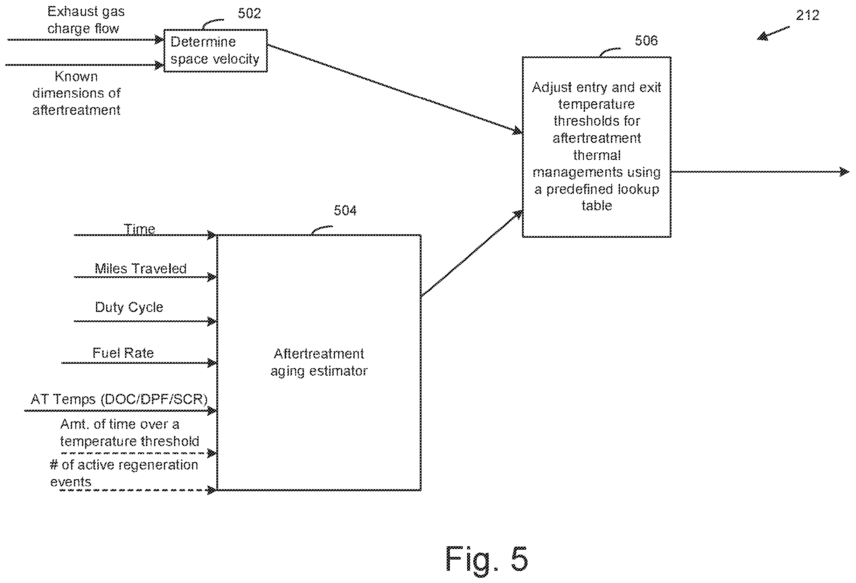

Based on the foregoing, FIGS. 4 and 5 depict example processes / logic for the controller 140 for dynamically adjusting thermal management entry and exit temperature thresholds. A first embodiment is shown in FIG. 4 while a second embodiment is shown in FIG. 5. In each embodiment, the aging circuit 212 estimates an age of the aftertreatment system (e.g., from FIG. 3) and the thermal management circuit 210 utilizes this determination in combination with other processes to adjust the thermal management mode entry and exit temperature thresholds. FIG. 4 shows incrementally adjusting the thermal management entry and exit temperature thresholds while FIG. 5 shows adjusting the thermal management mode entry and exit temperature thresholds according to predefined values.

Referring first to FIG. 4, at process 402, the controller determines a space velocity through the aftertreatment system 120 using an exhaust gas flow rate and a dimension of the aftertreatment system 120. In operation, the aftertreatment system model number may be recorded and referred to for the known dimensions in order to determine a dimension (e.g., volume) of the aftertreatment system or a component thereof (SCR reactor chamber). For example, an aftertreatment system identifier may be transmitted through the telematics unit 150 to a remote system to identify/determine the dimensions of the aftertreatment system or components thereof. Alternatively, the known dimensions may be programmed into the memory device 206. The thermal management circuit 210 determines the space velocity by measuring or estimating the exhaust gas flow rate (particularly, through the SCR) and dividing this rate by the volume of the space (particularly, the SCR). In operation, as the space velocity reduces for a given temperature condition, more time is spent in the catalyst for conversion and thus conversion efficiency typically goes up (e.g., NOx conversion). On the contrary, if the space velocity increases, conversion (particularly, NOx conversion) efficiency reduces (i.e., the faster the exhaust gas moves through the catalyst, which means that there is less time that the SCR catalyst has to work on that exhaust gas to reduce NOx emissions). Thus, space velocity becomes an important input in understanding SCR conversion efficiency.

At process 404, the aging circuit 212 determines an age of the aftertreatment system as described in regards to FIG. 3. As described herein, the age may be a value that is indicative of a deterioration amount for the aftertreatment system (particularly, the specified component, such as the SCR and/or the DOC). The value may be expressed as a numerical value (e.g., one to one-hundred), an alpha character (e.g., A for minimal deterioration and D for substantial deterioration), a code, etc. In combination with the inputs shown in FIG. 3, a variety of parameters may be used to determine an estimated age of the aftertreatment system. Aftertreatment aging has a significant effect on SCR conversion efficiency, and a variety of factors can cause the system to age. For example, aging may occur due to longer exposure to high temperatures or exposures from Sulphur in the fuel. The parameters used in the aftertreatment aging estimator may include time (i.e., on-time for the system), miles traveled, a number of duty cycles, fuel rate, aftertreatment temperatures for DOC, DPF, and/or SCR, an amount of time an aftertreatment temperature remains over a predefined temperature threshold, and/or number of active regeneration events. In some embodiments, the duty cycle includes at least one of a distance travelled, a fuel consumption per unit of time and/or distance, an average speed over time and/or an average load over time. At least one or more of these factors may be used. The aging circuit 212 may utilize one or more lookup tables with these factors to determine an age value for the system. As an example, if there is high oil consumption from the engine as a result of a lube system defect, more oil may be running through the aftertreatment system which may adversely affect operation of the aftertreatment system. During a new installation of an aftertreatment system, there is very little oil consumption, but with wear, there will be higher oil consumption and thus another source of Sulphur in the exhaust stream. Further, if the SCR is upstream of DOC, phosphorous and other oil-based contaminants may affect aging. The aging for both the SCR and DOC may be determined since the DOC is before the SCR. For instance, a feed gas comes into the SCR from the DOC, and thus the health of the exhaust feed gas in the SCR is determined by the health of the DOC. As such the SCR and the DOC are related to each other; as the DOC ages, the feed gas quality changes, which is significant because if that feed gas estimation is known, then the acidity can be known. However, either the SCR or the DOC may be used in the estimation.

The aging circuit 212 may also keep track of the number of active regeneration events to estimate the age the aftertreatment system. Regeneration refers to burning off buildup in the aftertreatment system to restore or improve operation of the system. Regeneration may occur actively or passively. Active regeneration occurs from specific commands intended to regenerate the aftertreatment system or a component thereof (e.g., commanding high power output plus activation of an electric heater). Passive regeneration refers to regeneration events that happen naturally during operation of the system (e.g., during high load conditions, the aftertreatment system temperature may increase to cause a regeneration) where the temperature of the exhaust gas and/or aftertreatment system component temperature reaches a predefined range or threshold (or, alternatively, certain conditions occur such as flow rate through the DPF increasing which indicates that deposits were burnt off the filter). The controller 140 may track the number and duration of active regeneration events commanded. The aging circuit 212 may also count the number and duration of passive regeneration events. Based on increasing the number and duration of active regeneration events and/or passive regeneration events, the aging circuit 212 may determine an increased "age" for the aftertreatment system. In other words and as an example, when the SCR is exposed to high temperatures during regeneration events, this condition contributes to the aging of the SCR.

At process 406, the controller 140 (particularly, the thermal management circuit 210) adjusts the thermal management mode entry and/or exit temperature thresholds based on the determined space velocity (process 402) and the determined age (process 404). Based on these data points (two - the determined space velocity and age), the thermal management circuit 210 determines at least one of an entry or an exit temperature threshold for at least one thermal management mode. The thermal management mode may have preset thermal management entry and exit temperature thresholds (stored in the memory device 206). At process 406, incremental adjustments to these stored entry and exit temperature thresholds is performed by the controller 140 (particularly, the thermal management circuit 210). In particular, the thermal management mode entry and/or exit temperature thresholds are incrementally adjusted up or down based on a feedback loop (process 408).

Accordingly, referring more particularly to process 408, the thermal management circuit 210 is structured to determine an error in SCR conversion efficiency based on a desired system out NOx and a determined system out NOx (i.e., actual system out NOx). A system out NOx sensor may acquire data indicative of a system out NOx. This value is then compared to a desired system out NOx, which may be based on an emissions regulation or another predefined value (e.g., by the manufacturer, operator, etc.). The difference between the desired system out NOx and the system out NOx is the "error." If the error is less than a predefined threshold, then no further adjustments are made to the at least one of the entry or exit temperature thresholds. However, if the error is greater than the predefined threshold, then the thermal management circuit 210 adjusts at least one of the entry or exit temperature threshold in an incremental amount (e.g., less than 10 degrees Celsius up or down). The predefined threshold may be predefined value from a manufacturer (or, an operator). The predefined threshold value may be a static value or a dynamic value that changes over time (e.g., updated as a vehicle ages, etc.).

The incremental adjustment may be predefined or be a function of the comparison of the determined error value to the predefined threshold. Regarding the predefined amount, the incremental adjustment amount may be predefined amount (e.g., 10 degrees Celsius) up or down, or be a predefined amount specific to the entry and exit temperature threshold (e.g., 10 degrees Celsius for changes to the entry temperature threshold and 15 degrees Celsius for changes to the exit temperature threshold). Regarding being a function of the comparison, the greater the error relative to the threshold may correspond with greater incremental adjustment amounts (e.g., if the error is greater than the threshold by X, then the adjustment is X whereas if the error is greater than the threshold by X+Y, then the adjustment amount is X+Y).

The controller 140 may continuously perform process 408 until the error is less than or equal to the threshold. At this point, the emissions have been controlled such that the determined SCR conversion efficiency is meeting the target or desired SCR conversion efficiency.

The conversion efficiency, amount, or value may also be determined with respect to the aftertreatment system as a whole and/or the system as a whole. Regarding the system as a whole, the system out NOx conversion efficiency may be determined in the following way: (engine out NOx - system out NOx)/(engine out NOx). A similar method may be used with the aftertreatment system: (aftertreatment system NOx inlet amount - aftertreatment system NOx outlet amount)/(aftertreatment system NOx inlet amount). Thus, the conversion efficiency may be determined across a variety of different components. In turn, the entry and exit temperature thresholds may be adjusted based on a NOx value (e.g., a system out NOx conversion value).

Referring now to FIG. 5, a process 500 for adjusting thermal management mode entry and exit temperature thresholds is shown, according to an example embodiment. Processes 502 and 504 correspond to processes 402 and 404 of process 400. However, process 506 depicts adjusting the thermal management mode entry and exit temperature thresholds according to predefined values. In particular, the adjustments are made according to a lookup table that may be stored by the memory 206 or in the thermal management circuit 210. In operation, the space velocity and determined aged (processes 502 and 504) represent two data points that are then used to in look-up table accessed by the thermal management circuit 210 to determine an adjustment value for at least one of the thermal management entry or exit temperature thresholds. The adjustment to the thermal management entry and exit temperature thresholds may be an adjustment value (e.g., plus 5 degrees Celsius for the entry temperature threshold) or a specific set point for the entry and/or exit temperature threshold (e.g., 150 degrees Celsius for entry temperature threshold). Relative to FIG. 4, instead of performing an active control loop on adjusting the temperature thresholds and comparing it with the SCR conversion efficiency, the controller utilizes a pre-determined lookup table at process 506. The lookup table may be developed based on experimental testing. As such, the SCR conversion efficiency or the error is not used in adjusting entry and exit temperature thresholds. This process may be advantageous in saving processing power compared to that of FIG. 4.

Similarly to FIG. 4, the thermal management circuit 210 is structured to communicate with and control, at least partly, the aftertreatment system 120. For instance, a command is sent to adjust the aftertreatment system temperature thresholds based on the determination made by the aging circuit 212. As the SCR conversion efficiency drops, either due to more aging or higher space velocities, the entry and exit temperature thresholds can be adjusted.

Based on the foregoing, examples of adjustment that may be performed with FIG. 4 or FIG. 5 are provided below. The determined space velocity and age (process 402, 502 and process 404, 504) may indicate that that the aftertreatment system (e.g., the SCR) has deteriorated (e.g., to a predefined level, or some other indicator) beyond a desired amount. For example in FIGS. 4 and 5, the two data points indicate a change to at least one of the entry or exit thermal management mode temperature thresholds. Alternatively, the data points may indicate that no change is necessary (the current entry and/or exit thresholds coincide with the determined adjusted set-points so no change is implemented). In this regard, if the entry temperature threshold is set too low, the SCR may be exposed to contaminants and the thermal management circuit 210 is structured to raise the entry temperature threshold. In a counter example, if the entry temperature threshold is set too high, the system may age undesirably fast and emissions suffer. Accordingly, the thermal management circuit 210 is structured to lower the entry temperature threshold for the thermal management mode.

In one specific example, based on determining that the aftertreatment system has deteriorated and that an adjustment is desired, the controller 140 may adjust the entry temperature threshold for the thermal management lower (i.e., decrease the entry thermal management temperature threshold), which results in triggering the thermal management mode at lower temperatures. In turn, the thermal management mode is triggered more often to help elevate aftertreatment system temperatures to aid operation of the aftertreatment system (e.g., NOx conversions). Additionally, the exit temperature threshold may be raised/increased in order to prolong the thermal management mode. Accordingly, the thermal management mode may be commanded at lower temperatures and for relatively longer periods of time than existing thermal management modes. Beneficially, the stress on the aftertreatment system to effectively reduce harmful emissions (e.g., NOx) may be mitigated.

As another specific example, the controller 140 may determine that the aftertreatment system is performing as desired or better based on the determined age and space velocity (process 402, 502 and process 404, 504). In turn, the controller 140 may increase the thermal management mode entry temperature threshold, such that less frequent commands for the thermal management mode are provided by the controller 140. Some thermal management commands may cause stress on one or more components of the aftertreatment system or other potentially undesired occurrences (e.g., post-injection may cause drops in fuel economy due to the fuel used in the post-injection). Thus, by lowering the frequency of the commanded thermal management mode, the potentially undesired occurrences may be reduced.

By dynamically changing the entry and exit temperature thresholds based on age, additional wear and tear from elevated temperature may be reduced. In this regard, adjusting the entry and exit thresholds may provide a robust system that actively combats emissions (e.g., NOx emissions) with aged components (e.g., SCR). As such, the present disclosure advantageously may prolong the health of SCR catalyst, for instance, and ensure compliance with emissions regulations as the SCR catalyst ages over time.

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A "coupled" to circuit B may signify that the circuit A communicates directly with circuit B (i.e., no intermediary) or communicates indirectly with circuit B (e.g., through one or more intermediaries).

While various circuits with particular functionality are shown in Figure 2, it should be understood that the controller 140 may include any number of circuits for completing the functions described herein. For example, the activities and functionalities of the thermal management circuit 210 and the aging circuit 212 may be combined in multiple circuits or as a single circuit. Additional circuits with additional functionality may also be included. Further, the controller 140 may further control other activity beyond the scope of the present disclosure.

As mentioned above and in one configuration, the "circuits" may be implemented in machine-readable medium for execution by various types of processors, such as the processor 204 of Figure 2. An identified circuit of executable code may, for instance, comprise one or more physical or logical blocks of computer instructions, which may, for instance, be organized as an object, procedure, or function. Nevertheless, the executables of an identified circuit need not be physically located together, but may comprise disparate instructions stored in different locations which, when joined logically together, comprise the circuit and achieve the stated purpose for the circuit. Indeed, a circuit of computer readable program code may be a single instruction, or many instructions, and may even be distributed over several different code segments, among different programs, and across several memory devices. Similarly, operational data may be identified and illustrated herein within circuits, and may be embodied in any suitable form and organized within any suitable type of data structure. The operational data may be collected as a single data set, or may be distributed over different locations including over different storage devices, and may exist, at least partially, merely as electronic signals on a system or network.

While the term "processor" is briefly defined above, the term "processor" and "processing circuit" are meant to be broadly interpreted. In this regard and as mentioned above, the "processor" may be implemented as one or more general-purpose processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multi-core processor (e.g., a dual core processor, triple core processor, quad core processor, etc.), microprocessor, etc. In some embodiments, the one or more processors may be external to the apparatus, for example the one or more processors may be a remote processor (e.g., a cloud based processor). Alternatively or additionally, the one or more processors may be internal and/or local to the apparatus. In this regard, a given circuit or components thereof may be disposed locally (e.g., as part of a local server, a local computing system, etc.) or remotely (e.g., as part of a remote server such as a cloud based server). To that end, a "circuit" as described herein may include components that are distributed across one or more locations.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure.

The foregoing description of embodiments has been presented for purposes of illustration and description. It is not intended to be exhaustive or to limit the disclosure to the precise form disclosed, and modifications and variations are possible in light of the above teachings or may be acquired from this disclosure. The embodiments were chosen and described in order to explain the principals of the disclosure and its practical application to enable one skilled in the art to utilize the various embodiments and with various modifications as are suited to the particular use contemplated. Other substitutions, modifications, changes and omissions may be made in the design, operating conditions and arrangement of the embodiments without departing from the scope of the present invention as expressed in the appended claims.

## Claims

1. A system, comprising:
a controller comprising at least one processor and at least one memory device coupled to the at least one processor, the at least one memory device storing instructions therein that, when executed by the at least one processor, cause the controller to perform operations including:
estimate an aging of an exhaust aftertreatment system coupled to an engine;
determine a space velocity through the exhaust aftertreatment system; and
adjust at least one of an entry temperature threshold or an exit temperature threshold for a thermal management mode for the exhaust aftertreatment system based on the space velocity and the estimated age of the exhaust aftertreatment system.

2. The system of claim 1, wherein the operations further include:
adjust the at least one of the entry temperature threshold or the exit temperature threshold based on a predefined amount using a look-up table based on the determined space velocity and age of the exhaust aftertreatment system.

3. The system of claim 1, wherein the space velocity is determined using an exhaust gas flow rate and a dimension regarding the exhaust aftertreatment system.

4. The system of claim 1, wherein the operations further include:
determine a system out NOx conversion amount;
compare the system out NOx conversion amount to a desired system out NOx conversion amount; and
adjust the at least one of the entry temperature threshold or the exit temperature threshold based on the comparison.

5. The system of claim 1, wherein the thermal management mode includes a command for at least one of a cylinder deactivation mode, an increase in fueling, a post-injection, a change in injection timing, an activation of an electric heater in the exhaust aftertreatment system, an increase in power output from the engine, an actuation of a turbocharger, an actuation of intake air bypass valve, an actuation of exhaust bypass valve, an actuation of EGR bypass valve, or a change of position of an intake air throttle.

6. The system of claim 1, wherein estimating the aging of the exhaust aftertreatment system comprises:
estimating a selective catalytic reduction catalyst age of a selective catalytic reduction system based on at least one of: (i) a time equivalent at a reference temperature, (ii) a Sulphur loading determination, (iii) an ammonia-to-nitrous oxide ratio, (iv) a duty cycle, or (v) a count and duration of active and passive regeneration events;
estimating a diesel oxidation catalyst age of a diesel oxidation catalyst based on at least one of (i) the time equivalent at the reference temperature or (ii) the Sulphur loading determination; and
estimating the aging of the exhaust aftertreatment system based on at least one of the selective catalytic reduction catalyst age or the diesel oxidation catalyst age.

7. A system, comprising:
an exhaust aftertreatment system coupled to an engine; and the controller of any preceding claim.

8. A method comprising:
estimating an aging of an exhaust aftertreatment system coupled to an engine; determining a space velocity through the exhaust aftertreatment system; and
adjusting at least one of an entry temperature threshold or an exit temperature threshold for a thermal management mode for the exhaust aftertreatment system based on the space velocity and the aging of the exhaust aftertreatment system.

9. The method of claim 8, further comprising:
adjusting the at least one of the entry temperature threshold or the exit temperature threshold a predefined amount using a look-up table based on the space velocity and the aging of the exhaust aftertreatment system.

10. The method of claim 8, wherein the space velocity is determined using an exhaust gas flow rate and a dimension regarding the exhaust aftertreatment system.

11. The method of claim 8, further comprising:
determining a system out NOx conversion amount;
comparing the system out NOx conversion amount to a desired system out NOx conversion amount; and
adjusting the at least one of the entry temperature threshold or the exit temperature threshold based on the comparison.

12. The method of claim 8, wherein the thermal management mode includes a command for at least one of a cylinder deactivation mode, an increase in fueling, a post-injection, a change in injection timing, an activation of an electric heater in the exhaust aftertreatment system, an increase in power output from the engine, an actuation of a turbocharger, an actuation of intake air bypass valve, an actuation of exhaust bypass valve, an actuation of EGR bypass valve, or a change of position of an intake air throttle.

13. The method of claim 8, wherein estimating the age of the exhaust aftertreatment system comprises:
estimating a selective catalytic reduction catalyst age of a selective catalytic reduction system based on at least one of: (i) a time equivalent at a reference temperature, (ii) a Sulphur loading determination; (iii) an ammonia-to-nitrous oxide ratio; (iv) a duty cycle based determination based on at least one of a distance travelled, a fuel burnt, an average speed or load over time; or (v) a count and duration of active or passive regeneration events;
estimating a diesel oxidation catalyst age of a diesel oxidation catalyst based on at least one of: (i) the time equivalent at the reference temperature, (ii) the Sulphur loading determination, (iii) the ammonia-to-nitrous oxide ratio, (iv) the duty cycle, or (v) the count and duration of active or passive regeneration events; and
estimating the aging of the exhaust aftertreatment system based on at least one of the selective catalytic reduction age and the diesel oxidation catalyst age.

## Patentansprüche

1. System, das Folgendes umfasst:
eine Steuereinheit, die mindestens einen Prozessor und mindestens eine Speichervorrichtung umfasst, die mit dem mindestens einen Prozessor gekoppelt ist, wobei die mindestens eine Speichervorrichtung darin Anweisungen speichert, die, wenn sie von dem mindestens einen Prozessor ausgeführt werden, die Steuereinheit veranlassen, Operationen durchzuführen, einschließlich:
Schätzen eines Alterns eines Abgasnachbehandlungssystems, das an einen Motor gekoppelt ist;
Bestimmen einer Raumgeschwindigkeit durch das Abgasnachbehandlungssystem hindurch; und
Einstellen mindestens eines eines Eingangstemperaturschwellenwerts oder eines Ausgangstemperaturschwellenwerts für einen Wärmeverwaltungsmodus für das Abgasnachbehandlungssystem basierend auf der Raumgeschwindigkeit und dem geschätzten Alter des Abgasnachbehandlungssystems.

2. System nach Anspruch 1, wobei die Operationen weiter Folgendes beinhalten:
Einstellen des mindestens einen des Eingangstemperaturschwellenwerts oder des Ausgangstemperaturschwellenwerts basierend auf einer vordefinierten Menge unter Verwendung einer Nachschlagetabelle, die auf der bestimmten Raumgeschwindigkeit und dem Alter des Abgasnachbehandlungssystems basiert.

3. System nach Anspruch 1, wobei die Raumgeschwindigkeit unter Verwendung einer Abgasströmungsrate und einer Abmessung, die das Abgasnachbehandlungssystem betrifft, bestimmt wird.

4. System nach Anspruch 1, wobei die Operationen weiter Folgendes beinhalten:
Bestimmen einer Systemausgangs-NOx-Umwandlungsmenge;
Vergleichen der Systemausgangs-NOx-Umwandlungsmenge mit einer gewünschten Systemausgangs-NOx-Umwandlungsmenge; und
Einstellen des mindestens einen des Eingangstemperaturschwellenwerts oder des Ausgangstemperaturschwellenwert basierend auf dem Vergleich.

5. System nach Anspruch 1, wobei der Wärmeverwaltungsmodus einen Befehl für mindestens einen eines Zylinderdeaktivierungsmodus, einer Erhöhung der Kraftstoffzufuhr, einer Nacheinspritzung, einer Änderung des Einspritzzeitpunkts, einer Aktivierung einer elektrischen Heizung in dem Abgasnachbehandlungssystem, einer Erhöhung der Leistungsausgabe des Motors, einer Betätigung eines Turboladers, einer Betätigung des Ansaugluft-Bypassventil, einer Betätigung des Abgas-Bypassventils, einer Betätigung des AGR-Bypassventils oder einer Änderung der Position einer Ansaugluftdrosselklappe beinhaltet.

6. System nach Anspruch 1, wobei das Schätzen des Alterns des Abgasnachbehandlungssystems Folgendes umfasst:
Schätzen des Alters eines Katalysators zur selektiven katalytischen Reduktion eines selektiven katalytischen Reduktionssystems basierend auf mindestens einem: (i) eines Zeitäquivalents bei einer Referenztemperatur, (ii) einer Schwefelbeladungsbestimmung, (iii) eines Ammoniak-zu-Distickstoffmonoxid-Verhältnisses, (iv) eines Arbeitszyklus oder (v) einer Anzahl und Dauer von aktiven und passiven Regenerationsereignissen;
Schätzen des Alters eines Dieseloxidationskatalysators eines Dieseloxidationskatalysators basierend auf mindestens einem (i) des Zeitäquivalents bei der Referenztemperatur oder (ii) der Schwefelbeladungsbestimmung; und
Schätzen des Alterns des Abgasnachbehandlungssystems basierend auf mindestens einem des Alters des Katalysators zur selektiven katalytischen Reduktion oder des Alters des Dieseloxidationskatalysators.

7. System, das Folgendes umfasst:
ein Abgasnachbehandlungssystem, das an einen Motor gekoppelt ist; und die Steuereinheit nach einem vorstehenden Anspruch.

8. Verfahren, das Folgendes umfasst:
Schätzen des Alterns eines Abgasnachbehandlungssystems, das an einen Motor gekoppelt ist;
Bestimmen einer Raumgeschwindigkeit durch das Abgasnachbehandlungssystem hindurch; und
Einstellen mindestens eines eines Eingangstemperaturschwellenwerts oder eines Ausgangstemperaturschwellenwerts für einen Wärmeverwaltungsmodus für das Abgasnachbehandlungssystem basierend auf der Raumgeschwindigkeit und dem Altern des Abgasnachbehandlungssystems.

9. Verfahren nach Anspruch 8, das weiter Folgendes umfasst:
Einstellen des mindestens einen des Eingangstemperaturschwellenwerts oder des Ausgangstemperaturschwellenwerts um eine vordefinierte Menge unter Verwendung einer Nachschlagetabelle basierend auf der Raumgeschwindigkeit und dem Altern des Abgasnachbehandlungssystems.

10. Verfahren nach Anspruch 8, wobei die Raumgeschwindigkeit unter Verwendung eines Abgasströmungsrate und einer Abmessung, die das Abgasnachbehandlungssystem betrifft, bestimmt wird.

11. Verfahren nach Anspruch 8, das weiter Folgendes umfasst:
Bestimmen einer Systemausgangs-NOx-Umwandlungsmenge;
Vergleichen der Systemausgangs-NOx-Umwandlungsmenge mit einer gewünschten Systemausgangs-NOx-Umwandlungsmenge; und
Einstellen des mindestens einen des Eingangstemperaturschwellenwerts oder des Ausgangstemperaturschwellenwert basierend auf dem Vergleich.

12. Verfahren nach Anspruch 8, wobei der Wärmeverwaltungsmodus einen Befehl beinhaltet für mindestens einen eines Zylinderdeaktivierungsmodus, einer Erhöhung der Kraftstoffzufuhr, einer Nacheinspritzung, einer Änderung des Einspritzzeitpunkts, einer Aktivierung einer elektrischen Heizung in dem Abgasnachbehandlungssystem, einer Erhöhung der Leistungsausgabe des Motors, einer Betätigung eines Turboladers, einer Betätigung des Ansaugluft-Bypassventils, einer Betätigung des Abgas-Bypassventils, einer Betätigung des AGR-Bypassventils oder einer Änderung der Position einer Ansaugluftdrosselklappe.

13. Verfahren nach Anspruch 8, wobei das Schätzen des Alters des Abgasnachbehandlungssystems Folgendes umfasst:
Schätzen des Alters eines Katalysators zur selektiven katalytischen Reduktion eines selektiven katalytischen Reduktionssystems basierend mindestens auf einem (i) eines Zeitäquivalents bei einer Referenztemperatur, (ii) einer Schwefelbeladungsbestimmung, (iii) einem Ammoniak-zu-Stickoxid-Verhältnis; (iv) einer Bestimmung basierend auf der Arbeitszyklus basierend mindestens auf einem einer zurückgelegten Strecke, einem verbrannten Kraftstoff, einer Durchschnittsgeschwindigkeit oder -last über die Zeit; oder (v) einer Anzahl und Dauer von aktiven oder passiven Regenerationsereignissen;
Schätzen des Alters eines Dieseloxidationskatalysators eines Dieseloxidationskatalysators basierend auf mindestens einem: des (i) Zeitäquivalents bei der Referenztemperatur, (ii) der Schwefelbeladungsbestimmung, (iii) dem Ammoniak-zu-Stickoxid-Verhältnis, (iv) dem Arbeitszyklus oder (v) der Anzahl und Dauer aktiver oder passiver Regenerationsereignisse; und
Schätzen des Alterns des Abgasnachbehandlungssystems basierend auf mindestens einem des Alters der selektiven katalytischen Reduktion und dem Alter des Dieseloxidationskatalysators.

## Revendications

1. Système comprenant :
un dispositif de commande comprenant au moins un processeur et au moins un dispositif de mémoire couplé à le au moins un processeur, le au moins un dispositif de mémoire stockant des instructions dans celui-ci qui, lorsqu'elles sont exécutées par le au moins un processeur, amènent le dispositif de commande à effectuer des opérations incluant :
l'estimation du vieillissement d'un système de post-traitement de gaz d'échappement couplé à un moteur ;
la détermination d'une vitesse spatiale à travers le système de post-traitement de gaz d'échappement ; et
l'ajustement d'au moins un d'un seuil de température d'entrée ou d'un seuil de température de sortie pour un mode de gestion thermique du système de post-traitement de gaz d'échappement sur la base de la vitesse spatiale et de l'âge estimé du système de post-traitement de gaz d'échappement.

2. Système selon la revendication 1, dans lequel les opérations incluent en outre :
l'ajustement du au moins un du seuil de température d'entrée ou du seuil de température de sortie sur la base d'une quantité prédéfinie à l'aide d'une table de consultation basée sur la vitesse spatiale déterminée et l'âge du système de post-traitement de gaz d'échappement.

3. Système selon la revendication 1, dans lequel la vitesse spatiale est déterminée à l'aide d'un débit de gaz d'échappement et d'une dimension se rapportant au système de post-traitement de gaz d'échappement.

4. Système selon la revendication 1, dans lequel les opérations incluent en outre :
la détermination d'une quantité de conversion de NOx à la sortie d'un système ;
la comparaison de la quantité de conversion de NOx à la sortie du système à une quantité souhaitée de conversion de NOx à la sortie du système ; et
l'ajustement du au moins un du seuil de température d'entrée ou du seuil de température de sortie sur la base de la comparaison.

5. Système selon la revendication 1, dans lequel le mode de gestion thermique inclut une commande pour au moins un d'un mode de désactivation de cylindre, d'une augmentation de ravitaillement en carburant, d'une post-injection, d'un changement de l'avance à l'injection, d'une activation d'un élément chauffant électrique dans le système de post-traitement de gaz d'échappement, d'une augmentation de la puissance sortie du moteur, d'un actionnement d'un turbocompresseur, d'un actionnement d'une soupape de dérivation d'air d'admission, d'un actionnement d'une soupape de dérivation d'échappement, d'un actionnement d'une soupape de dérivation d'EGR ou d'un changement de position d'un papillon d'air d'admission.

6. Système selon la revendication 1, dans lequel l'estimation du vieillissement du système de post-traitement de gaz d'échappement comprend :
l'estimation de l'âge du catalyseur de réduction catalytique sélective d'un système de réduction catalytique sélective sur la base d'au moins un : (i) d'un équivalent de temps à une température de référence, (ii) d'une détermination de la charge en soufre, (iii) d'un rapport ammoniac/oxyde nitreux, (iv) d'un cycle de service, ou (v) d'un nombre et d'une durée d'événements de régénération active et passive ;
l'estimation de l'âge du catalyseur d'oxydation diesel sur la base d'au moins un (i) de l'équivalent temps à la température de référence ou (ii) de la détermination de la charge en soufre ; et
l'estimation du vieillissement du système de post-traitement de gaz d'échappement sur la base d'au moins un de l'âge du catalyseur de réduction catalytique sélective ou de l'âge du catalyseur d'oxydation diesel.

7. Système comprenant :
un système de post-traitement de gaz d'échappement couplé à un moteur ; et le dispositif de commande selon une quelconque revendication précédente.

8. Procédé comprenant :
l'estimation du vieillissement d'un système de post-traitement de gaz d'échappement couplé à un moteur ;
la détermination d'une vitesse spatiale à travers le système de post-traitement de gaz d'échappement ; et
l'ajustement d'au moins un d'un seuil de température d'entrée ou d'un seuil de température de sortie pour un mode de gestion thermique du système de post-traitement de gaz d'échappement sur la base de la vitesse spatiale et du vieillissement du système de post-traitement de gaz d'échappement.

9. Procédé selon la revendication 8, comprenant en outre :
l'ajustement du au moins un du seuil de température d'entrée ou du seuil de température de sortie sur la base d'une quantité prédéfinie à l'aide d'une table de consultation basée sur la vitesse spatiale déterminée et du vieillissement du système de post-traitement de gaz d'échappement.

10. Procédé selon la revendication 8, dans lequel la vitesse spatiale est déterminée à l'aide d'un débit de gaz d'échappement et d'une dimension se rapportant au système de post-traitement de gaz d'échappement.

11. Procédé selon la revendication 8, comprenant en outre :
la détermination d'une quantité de conversion de NOx à la sortie d'un système ;
la comparaison de la quantité de conversion de NOx à la sortie du système à une quantité souhaitée de conversion de NOx à la sortie du système ; et
l'ajustement du au moins un du seuil de température d'entrée ou du seuil de température de sortie sur la base de la comparaison.

12. Procédé selon la revendication 8, dans lequel le mode de gestion thermique inclut une commande pour au moins un d'un mode de désactivation de cylindre, d'une augmentation de ravitaillement en carburant, d'une post-injection, d'un changement de l'avance à l'injection, d'une activation d'un élément chauffant électrique dans le système de post-traitement de gaz d'échappement, d'une augmentation de la puissance sortie du moteur, d'un actionnement d'un turbocompresseur, d'un actionnement d'une soupape de dérivation d'air d'admission, d'un actionnement d'une soupape de dérivation d'échappement, d'un actionnement d'une soupape de dérivation d'EGR ou d'un changement de position d'un papillon d'air d'admission.

13. Procédé selon la revendication 8, dans lequel l'estimation de l'âge du système de post-traitement de gaz d'échappement comprend :
l'estimation de l'âge d'un catalyseur de réduction catalytique sélective d'un système de réduction catalytique sélective sur la base d'au moins un : (i) d'un équivalent de temps à une température de référence, (ii) d'une détermination de la charge en soufre ; (iii) d'un rapport ammoniac/oxyde nitreux ; (iv) d'une détermination basée sur le cycle de service basée sur au moins un d'une distance parcourue, d'un carburant brûlé, d'une vitesse ou d'une charge moyenne au fil du temps ; ou (v) d'un nombre et d'une durée d'événements de régénération active ou passive ;
l'estimation de l'âge d'un catalyseur d'oxydation diesel sur la base d'au moins un : (i) de l'équivalent temps à la température de référence, (ii) de la détermination de la charge en soufre, (iii) du rapport ammoniac/oxyde nitreux, (iv) du cycle de service, ou (v) du nombre et de la durée d'événements de régénération active ou passive ; et
l'estimation du vieillissement du système de post-traitement de gaz d'échappement sur la base d'au moins un de l'âge de la réduction catalytique sélective et de l'âge du catalyseur d'oxydation diesel.
